# EUROPEAN PATENT SPECIFICATION

(11) **EP 3 293 922 B1**
(45) Date of publication and mention of the grant of the patent: **30.01.2019**
(21) Application number: 16188568.6
(22) Date of filing: 13.09.2016
(51) Int. Cl.: H04L 12/40, H04L 12/66, H04L 12/413

(54) **INTELLIGENT DATA NODE FOR SATELLITES**
INTELLIGENTER DATENKNOTEN FÜR SATELLITEN
NOEUD DE DONNÉES INTELLIGENT POUR SATELLITE

(43) Date of publication of application: 14.03.2018
(73) Proprietor: Space Products and Innovation UG, 28199 Bremen (DE)
(72) Inventor: Qedar, Ran, 64347 Griesheim (DE); Sridharan, Saish, 28211 Bremen (DE); Federico, Giulia, 64347 Griesheim (DE)
(74) Representative: Tergau & Walkenhorst Patentanwälte PartGmbB

(56) References cited:
- CN-U- 202 190 284
- US-A- 5 152 482
- US-A- 5 271 582
- US-B1- 6 330 093

## Description

### Field of the invention

The invention relates to satellite technology. In particular, it relates to techniques for interconnecting spacecraft electronic equipment modules that are mounted in an unmanned spacecraft.

### Background of the invention

Spacecrafts such as large satellites typically comprise several subsystems. The subsystems communicate with an on-board computer which typically stores, analyses, and processes the data and, for some subsystems, sends control signals. Known satellites use multiple complex hardwire techniques for the distribution of commands and acquisition of telemetry signals between various subsystems. Typically several subsystems, comprising payloads and avionics have to be arranged and wired.

The US 6,330,093 B1 describes a standardized interface between a spacecraft backbone structure and multiple spacecraft modules that are coupled to the backbone structure mechanically, electrically and optically.

The US 5,271,582 described an unmanned spacecraft in which multiple subsidiary payloads are connected to standard mechanical and electrical interfaces provided by an expendable or recoverable modular mother satellite bus.

The CN 202 190 284 U discloses a protocol converter for CAN bus and SpaceWire bus which comprises a central processing unit, a SpaceWire interface logic module and a CAN bus controller and which allows bus cinversiob between CAN bus data frames and SpaceWire data frames.

The construction of a satellite faces several challenges. The modules are mounted onto the spacecraft and are interconnected with extremely complex wiring harnesses. Communication links between these different subsystems with the central computer have to be established and are built in a custom way. Spacecraft design, integration and testing in this way become a costly and time-consuming effort. Even small design changes are rendered difficult or practically impossible. The custom design is typically motivated by the high cost of weight; hence a satellite with a weight as small as possible is often the design goal.

A satellite usually comprises a custom-made remote terminal unit (RTU) which is especially built and configured for the satellite in which it is to be employed. The RTU is therefore not a mass product and is not extendable beyond the original configuration.

Known satellite bus interfaces currently use different standards, including MIL1553B, SpaceWire, CAN bus, UART, I2C and SPI. During design and integration the satellite bus is adjusted in both the hardware and software layers to be compatible to the satellite subsystem. Subsystems also require adaption on both hardware and software. This adaption is done as a customization for each satellite and requires further qualification and validation before flight.
This construction has several limitations, configuration of the satellite not flexible.

### Summary of the invention

The aim of the invention is therefore to allow a flexible construction of a satellite. A further aim is to allow agile satellite design.
A further aim is to provide a satellite system which allows reconfiguration.
A further aim is to provide a fast and simple testing of space equipment.

### Disclosure of the invention

In a first aspect, the invention relates to an intelligent satellite data node for use in a satellite, comprising a data processing unit and comprising a data storage unit, further comprising at least one space-qualified interface for a data connection to a subsystem, especially a payload or avionics, and/or to a, preferably on-board, computer, whereby the data node for each interface comprises a corresponding connector, and whereby the data storage unit is configured to store a plurality of data sheets, and whereby the data processing unit is configured, by employing the data sheet, to convert a data stream of the subsystem to a standardized data stream with a standard format which is defined in the data node and to transmit the standardized data stream to the on-board computer via the main data interface.

Preferred embodiments of the invention are described in relation to the dependent claims and the description of the enclosed drawings.

The invention is based on the consideration that a major limitation of current satellite design is the lack of flexibility. If design changes have to be made during later stages of the satellite construction, they involve time-consuming processes of rewiring and reconfiguration. This also involves a dramatic increase in the costs.

Applicant has found that the satellite configuration can be made flexible by providing an intelligent component or node which is coupled between the respective subsystem and the computer and acts as an intermediate layer. This node is configured to understand the communication of a plurality of subsystems and therefore understands the respective subsystem and to establish a data connection to the on-board computer. This allows exchanging the subsystem by another subsystem if necessary. In this way, subsystems can be rearranged without the need to redo the wiring.

In this way, a functionality resembling plug-and-play is realized for a satellite. Satellite design becomes much more flexible and allows adopting changes in satellite design as they become necessary. The intelligent satellite node can involve additional weight in the satellite. Previously, the addition of weight has been considered to be avoided for budgetary reasons. Applicant, however, has found that the costs for the additional weight of the respective node in typical processes are considerably less than the cost for typical activities of reconfiguring / redesigning the satellite.

The intelligent data node is preferably suitable and enabled for use in an unmanned and/or manned spacecraft. The standard format for the standardized data stream which is defined in the data node is preferably stored in the data storage unit.

The subsystem is preferably a payload or avionics / an avionics module. The respective payload is preferably a camera system, a signal transceiver for TV broadcast or a global navigation signal transmitter. The respective avionics is preferably a sensor and/or actuator for attitude, position and/or thermal control, power distribution unit, power control unit, transceiver, antenna, memory units

The data processing unit and data storage unit are terms which denote their functionality. They can be built as different hardware and/or software modules. They can also be integrated into a common hardware and/or software module.

The data sheet is preferably realized as a data structure which comprises information on a specific avionic or payload unit. This information preferably comprises one or more of the group: data format, list of telemetry parameters and their attributes, list of commands and their attributes, functional modes of the unit, initialization process/shut down sequences of the subsystem comprised of a list of commands, specification of the subsystem such as size, mass, voltage, power consumption, data interface, and measurement accuracies.

In a preferred version, the data sheet comprises information on data format, list of telemetry parameters and their attributes, list of commands and their attributes, functional modes of the unit, specification of the subsystem such as size, mass, voltage, power consumption, data interface, and measurement accuracies.

Optionally and preferred, it further comprises information on the initialization process / shut down sequences comprised of a list of commands.

Preferably at least two or more data sheets are stored in said data storage unit.

Preferably the space-qualified interface is of the group: SpaceWire, MIL1553B, CAN, I2C, RS422, RS232, SPI, fibrewire, wizardlink.

Preferably, the data node comprises at least two or three of these interfaces. Preferably, the data nodes comprise the interfaces SpaceWire, MIL1553B and CAN.

Advantageously, the data processing unit is configured to convert protocols between these interfaces. The conversion between these protocols is preferably performed by analysing data frames of the data stream of a subsystem and by adopting and/or changing the structure of these data frames. In this way, a communication of data between respective interfaces which use different protocols is enabled. Typical protocols are TCP/IP and UDP. As an example, if a protocol of a subsystem or the main-board computer which sends data requires specified data units such as an ACK, while the protocol of the data receiving component does not provide an ACK, it is inserted / provided by the data node.

The data processing unit advantageously is configured to identify a connected subsystem, especially payload or avionics. This identification can be performed by one method described below or a combination of two or more methods described below. The identification process preferably is performed according to the data interface, i.e. all units / subsystems that have a specific data interface, then according to the data format.

The identification preferably is performed by means of the data sheet stored in the data storage unit. Preferably the data format of the data stream of the subsystem is compared with at least one data sheet. If the data format is identical or similar up to confidence level, the respective subsystem is considered to be identified as a subsystem which is described in the data sheet. In a preferred embodiment, the data stream of the subsystem is compared with all data sheets, and the best match is used for the identification. The confidence level is preferably given by the percent of the matching expected values in the data format (for example the data packet is a new version with 2% more parameters). Preferably, it lies between 90% and 100%, most preferably at 95%.

Preferably, the identification is performed by decoding data packets received from said subsystem multiple times, each time according to a subsystem reference table stored in said data storage unit and/or data sheet and analysing the validity of data to match to most probable subsystem.

Preferably, the identification is performed by a lookup of an application identification number (APID) as defined in the Packet Utilization Standard (PUS).

As described above, from the described identification methods, only one method or a combination of more than one method can be performed simultaneously or subsequently. The results of each method can be compared and from these results, a final identification can be done, possibly employing Boolean logic.

Preferably, after identification of the subsystem, the data node initializes the subsystem. Advantageously, a sequence of commands is sent to set the frequency of the telemetry, the mode of the unit, the limits of its values and any reference points. For example, a star tracker would receive the frequency to which to send the attitude data, a command to switch to operation mode, a limit on the value of the stars it should identify and the current time and date.

In a preferred embodiment, the data node is configured for a connection with at least one further data node being connected to the same subsystem, whereby the data node converts the data stream from both subsystem connections to the standardized data stream. In this way, payloads or avionics which require more connectors than provided on the data node can be connected to the on-board computer. A first data node in this way is connected to a subsystem. The first data node is connected to a second data node which is connected to the same subsystem. The first data node in this way receives two data streams from the subsystem, one directly from its own connection to the subsystem and one from the second data node connected to the same subsystem. The second data node in this case essentially functions as a router, routing the data from the subsystem to the first data node, essentially without processing and/or modifying it. The first data node converts these two streams into the standardized data stream.

The first data node in this configuration / application is /functions as a master, while the second and any other node connected to it is /functions as a slave and adds another data stream through that connection extension, especially through the I2C protocol. The master identifies a slave and retrieves the information and merge with the data coming from the other interfaces.

The data processing unit preferably is configured to store data received from the connected subsystem in the data storage unit. The data storage unit to this end comprises a, preferably non-volatile, storage, especially a hard disk, flash disk, electrical erasable programmable read only memory (EEPROM), or Random Access Memory (RAM) for storing the data.

Preferably, the data node comprises a casing on which the at least connector is provided. The casing allows convenient easy handling of the data node and provides protection for the electronic components within.

In a preferred embodiment, a common railing is provided which is configured to receive at least two connectors.

The casing is advantageously essentially shaped as a parallelepiped, whereby at least at two walls with connectors are provided. Most preferably, the casing is built as a cuboid or cube. The casing is preferably essentially made of one or more aluminium alloys, stainless steel, or composite material.

In a preferred embodiment, at least one wall of the casing comprises at least two connectors. Preferably, at least four walls comprise at least two connectors, respectively.

The respective connector is preferably from the group: DSUB, MDM, coaxial, circular, RG45, 0.1" pin, mini-usb

Summarizing, the intelligent node provides a number of services, among them subsystem identification ability, initialization of a subsystem, self-diagnostics, initiating a transmission, ability to analyse data, changing the data sheet, data monitoring, self-management.

In a further aspect, the invention relates to a method for operating a data node, whereby the data node is connected to a computer and to at least one connected subsystem, whereby data which is received from the subsystem by the data node is displayed by means of the computer. The computer is preferably a personal computer. The computer is preferably connected to the data node by an Ethernet or USB connection. The term "displayed" denotes in a general term to allow a user of the computer to sense and/or inspect the data which can, preferably, be displayed on a display. It can in addition / alternatively also comprises making the data available as audio.

The invention in a further aspect relates to a method for operating a data node, whereby a computer is connected to the data node for configuration of the data node. The computer is preferably connected to the data node by an Ethernet or USB connection. Configuration preferably includes at least of the operations of the group: adding / removing / updating at least one datasheet, updating at least one data interface specification (speed, data protocols, packet types, etc.), retrieving logs of the incoming data.

In a further aspect, the invention relates to a satellite system, comprising an on-board computer, further comprising at least one subsystem, whereby a data node described above is provided which is connected to the subsystem and to the on-board computer, and whereby the computer is configured to receive the standardized data stream of the data node. Preferably, a driver is provided in the computer which listens /receives the standardized data stream of each respective data node.

In a further aspect, the invention relates to a satellite which comprises a satellite system described above.

The advantages of the invention are especially as follows. The intelligent satellite node allows an agile design of the corresponding satellite and a simple and fast integration of a spacecraft. In this way, a plug-and-play functionality is realized in a satellite / spacecraft. The intelligent data node allows connecting any satellite subsystem with the on-board computer without installing any additional software or adapting the employed hardware connectors. The intelligent data node allows continuing to use common industry components. It adapts and integrates existing standard connectors and software into one device by adding translation protocols, device recognition and plug and play functionality as software services. The intelligent satellite data node removes the need for customization by acting as a smart Remote Terminal Unit (RTU) that can connect to any subsystem without changes to the hardware. It connects to a subsystem using one of the available interfaces, identifies the sub-system and informs the main computer, thus establishes a communication channel without the need for custom configuration.

### Brief description of the drawings

Further features and advantages of the present invention shall become clearer from the following detailed description of some of its preferred embodiments, made with reference to the attached schematic drawings and given as an indication and not for limiting purposes.

In particular, the attached drawings are included to provide a further understanding of the invention and are incorporated in and constitute a part of this specification. The drawings together with the description explain the principles of the invention. In the drawings, corresponding characteristics and/or components are identified by the same reference numbers. In these drawings:
- FIG. 1: a satellite system comprising an on-board computer, an intelligent data node and two subsystems;
- FIG. 2: a diagram of an intelligent satellite data node in a preferred embodiment;
- FIG. 3: a diagram of the functionalities of the on-board computer and the intelligent satellite data node; and
- FIG. 4: a preferred embodiment of the data node according to FIG. 2 in a perspective view.

### Detailed description of the invention

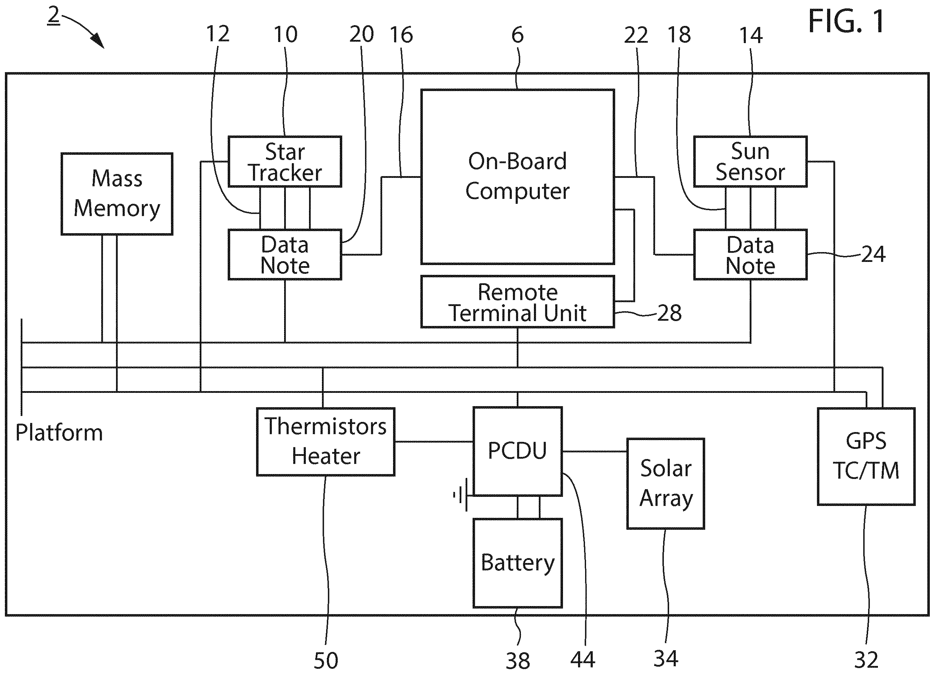

FIG. 1 shows a satellite system 2 which is suitable for installation in a manned and/or unmanned spacecraft, especially a satellite. Satellite system 2 comprises an on-board computer 6 and a subsystem 10 and a subsystem 14. Subsystems 10, 14 in the present preferred embodiment are payloads. The subsystems 10, 14 are connected to on-board computer 6, respectively, by an intelligent satellite data node 20, 24. Subsystem 10 is connected to on-board computer 6 by data node 20; subsystem 14 is connected to on-board computer 6 by data node 24. These connections are realized by data lines 12, 16. Subsystem 10 in this way by data line 12 is connected to data node 20; data node 20 is connected via data line 16 to on-board computer 6. Subsystem 14 in this way by a data line 18 is connected to data node 24; data node 24 is connected via a data line 22 to on-board computer 6.

The unmanned spacecraft in a known manner further comprises a remote terminal unit (RTU) 28 connected by a data line to on-board computer 6. It further comprises a GPS and/or Telecommands and Telemetry (TC/TM) module 32, a solar array 34, a battery 38, a Power Control and Distribution Unit (PCDU) 44, and thermistors /heater 50. The remote terminal unit 28 manages the subsystems 10, 14. RTU 28 is typically designed for the specific mission and provides electronic components and card units for supplying analogue / digital signals and functions as an external command box-

The satellite system 2 can be designed in a flexible way and allows agile satellite design, integration and production by employing the data nodes 20, 24. The respective data node 20, 24 provides an extra layer between the on-board computer 6 and the respective sub-system 10 or 14. Data streams from subsystems 10, 14 are in this way input to the respective data node 20, 24. The data node 20, 24 processes the respective data stream and sends a standardized data stream to on-board computer 6. As will be explained below, the respective data node 20, 24 provides a plug-and-play ability by identifying the device / subsystem (one or more) connected to it without user intervention. These subsystems are the payloads of the satellites or avionics such as such as star-tracker, sun-sensor. The data node 20, 24 or adapter reduces the complexity of satellite integration by identifying the subsystem 10, 14 once it is connected to and initializing it. The communication to the subsystem is initiated by the data node 20, 24 and the data is sent to the on-board computer 6 once it is received.

While in the present example two subsystems 10, 14 are connected to on-board computer 6, in other preferred embodiment, further subsystems can be connected to on-board computer 6. The subsystems can be payloads as well as avionics.

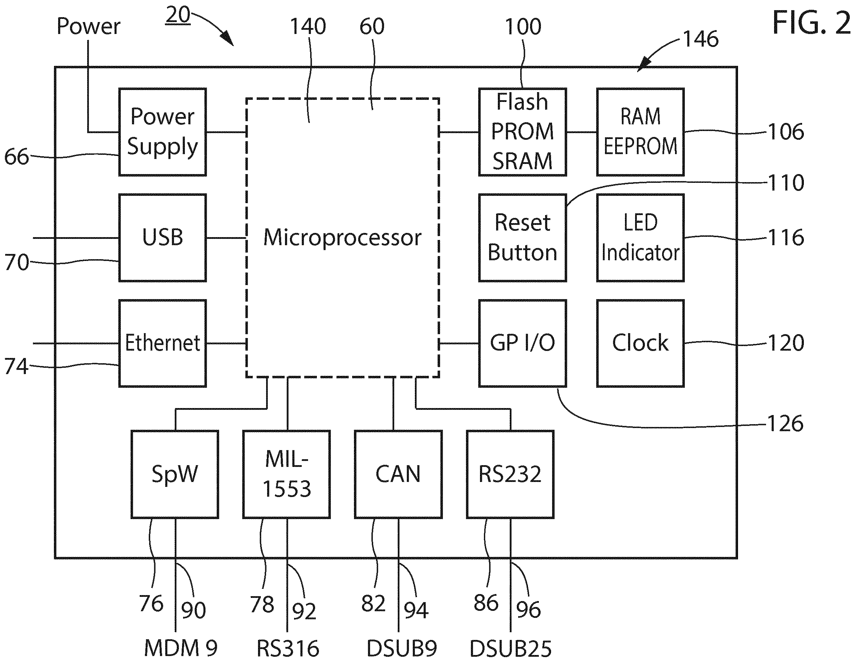

Fig. 2 shows an electrical sketch of the data node 20. Data node 20 comprises a microprocessor 60, a power and aux supply 66, different interfaces and its bridges 70, 74, 76, 78, 82, 86. The space-qualified interfaces which are implemented in data node 20 are SpaceWire, MIL-STD-1553B, CAN, UART, Ethernet and USB. The bridges 70-86 for these respective interfaces convert the respective protocols to a readable data and stored in the memory. The respective bridge 70, 74, 76, 78, 82, 86 is in the present environment an electronic module which preferably contains a connector and electronic components such as a microprocessor and/or microcontroller for listening to data coming in from the connector, a space-qualified data interface and corresponding protocol. The bridges 70, 74, 76, 78, 82, 86 in another preferred embodiment can be integrated into the microprocessor 60.

Bridge 70 provides a USB connection. Bridge 74 provides an Ethernet connection. Bridge 76 contains the SpaceWire interface and comprises an MDM9 connector. Bridge 78 contains the MIL-1553 interface and comprises an RS 316 connector. Bridge 82 contains the CAN interface and a DSUB9 connector. Bridge 86 contains the RS232 interface and comprises a DSUB25 connector.

The connectors of data node 20, .i.e. the hardware-type connections through which subsystems are connected to data node 20 are co-axial, MDM, D-SUBs. The data node 20 has a Flash memory 100 and a RAM storage 106 in which drivers and data for the identification of the respective subsystem such as the Interface Control Documents (ICDs), electronic data sheet, and a Telemetry/Telecommand table are stored. A reset switch 110 is provided in case of the occurrence of errors in power and/or data flow.

The data node 20 further comprises an optical indicator 116 which in the present embodiment is built as an LED, a clock 120 as well as a General Purpose (GP) I/O 126.
The microprocessor 60 is a data processing unit 140 of data node 20, while Flash memory 100 and RAM storage 106 build a data storage unit 146 of data node 20.

Data nodes 20, 24 serve as respective adapters / intermediate layers between the respective subsystem 10, 14 and the on-board computer 6. The adapter is configured to identify a connected subsystem 10, 14 and to initialize it when it is connected. It comprises a self-diagnostic functionality which is the ability of the adapter to identify the fault in the interface pin connection, i.e. a fault in the pin connection of the connector of data node 20 to the respective subsystem 10, 14. The adapter also has the ability to analyse the data in the data stream being received from the subsystem 10, 14 and to change/add the data sheet in case of new subsystem identification The subsystem 10, 14 is identified by the data sheet and used during the operation to understand and/or process the incoming data.

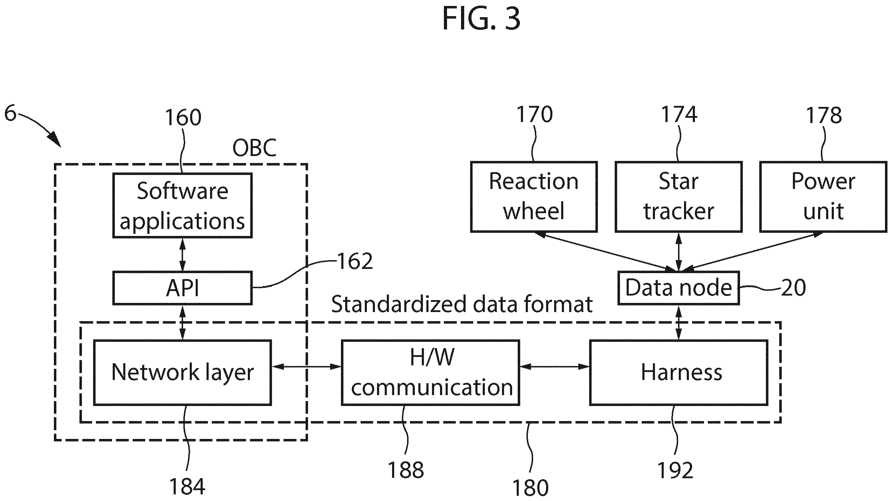

In FIG. 3, the functionalities of on-board computer 6 and data node 20 are displayed. On-board computer 6 comprises an application module 160 in which software applications are implanted such as AOCS, Thermal, Power. A software module 162 is essentially designed / working as a driver which listens for and receives one or more standardized data streams from data nodes which are connected to subsystems as for example shown in FIG .1. In the shown example, data node 20 is connected to one or more subsystems, in the example a reaction wheel 170, a star tracker 174 or a power unit 178.

Data node 20, once it has identified the connected subsystem 170, 174, 178 receives data from the subsystem 170, 174, 178 and by using the corresponding data sheet converts it to a standardized data stream with a standardized data stream format 180. The standardized data stream format is also used for commands which are sent from computer 6 to data node 20.
The standardized data format is defined and stored in the node 14, 20 and matches the data format which the corresponding driver in the on-board computer 6 expects.

The standardized data format and the corresponding standardized data stream are preferably employed for the communication of one or more of the following components. It can be used for communication between units of on-board computer (processor unit, memory unit, bus unit). It can be used for communication with the attitude and orbit control systems, among them sensors such as star tracker, magnetometer, gyro, earth sensor, sun sensor, GPS/Navigation and/or actuators such as reaction / momentum wheel, magnetorquer, electrical propulsion. It can also be used for communication with power systems such as power conditioning and distribution unit, power regulator, converter. It can also be used for communication with a thermal system such as active thermal cooling. It can also be used for communication with a propulsion system such as electrical propulsion. It can also be used for communication with a communication system such as a transceiver.

Standardized data stream format 180 comprises a network layer 186, a H/W (hardware) communication such as 1553B, SpaceWire, CAN, by which it rendered compatible to those data streams, and a harness 192.

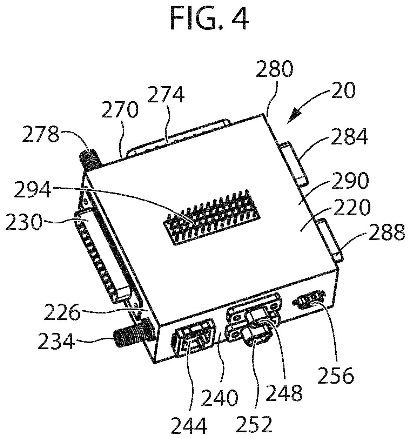

Fig. 4 shoes a perspective view of a data node 20. Data node 20 comprises a casing 220 which is essentially built as a cuboid and is made of aluminium alloys or stainless steel. On a first side wall 226, an UART connector 230 and a coaxial connector 234 are provided. On a second side wall 240, an Ethernet connector 244, a SpaceWire (MDM) connector 248, 252 and a mini-USB connector 256. On a third side wall 270, an UART connector 274 (for instance RS232) and a coaxial connector 278 are provided. On a fourth side wall 280, a CAN bus connector 284 and a D-sub connector 288 are provided. On a fifth front wall 290, an i2c one pin connector 294 is provided. The adapter box or casing 220 preferably is cubical in shape or has the shape of a cuboid and has railings to be compatible for multiple connectors. The connectors can be chosen and assembled on the casing by the user.

The invention thus conceived can be subjected to numerous modifications and variants all falling within the scope of the inventive concept. In addition, all details can be replaced by other technically equivalent elements. In practice, all the materials used, as well as the shapes and contingent dimensions, may vary depending on the requirements without departing from the scope of protection of the claims.

## Claims

1. Intelligent satellite data node (20, 24) for use in a satellite, comprising a data processing unit (140) and comprising a data storage unit (146), further comprising at least one space-qualified data interface (76-86) for a data connection (12, 18) to a subsystem (10, 14), especially a payload or avionics, and/or to an on-board computer (6), whereby said data node (20, 24) for each interface comprises a corresponding connector (230, 234, 244, 248, 252, 256, 274, 278, 284, 288, 294), and whereby said data storage unit (146) is configured to store a plurality of data sheets, and whereby said data processing unit (140) is configured, by employing said data sheet, to convert a data stream of said subsystem (10, 14) to a standardized data stream with a standard format (180) which is defined in said data node (20, 24) and to transmit said standardized data stream to said on-board computer (6) via said data interface.

2. Data node (20, 24) according to claim 1, whereby said space-qualified data interface is of the group: SpaceWire, MIL1553B, CAN, I2C, RS422, RS232, SPI, fibrewire, wizardlink.

3. Data node (20, 24) according to claim 1 or 2, whereby said data processing unit (140) is configured to convert protocols between said interfaces (76-86).

4. Data node (20, 24) according to one of the claims 1 to 3, whereby said data processing unit (140) is configured to identify a connected subsystem (10, 14).

5. Data node (20, 24) according to claim 4, whereby said identification is performed by means of said data sheet stored in said data storage unit (146).

6. Data node (20, 24) according to claim 5, whereby said identification is performed by decoding data packets received from said subsystem (10, 14) multiple times, each time according to a subsystem reference table stored in said data storage unit (146) and/or data sheet and analysing the validity of data to match to most probable subsystem (10, 14).

7. Data node (20, 24) according to one of the claims 4 to 6, whereby said identification is performed by a lookup of an identification number assigned to and transmitted by said subsystem (10, 14) and stored in said data storage unit (146).

8. Data node (20, 24) according to one of the claims 4 to 7, whereby said identification is performed by a lookup of an application identification number as defined in the Packet Utilization Standard.

9. Data node (20, 24) according to one of the claims 4 to 8, whereby after identification of said subsystem (10, 14), said data node (20, 24) initializes said subsystem (10, 14).

10. Data node (20, 24) according to one of the claims 1 to 9, whereby said data node (20, 24) is configured to perform a self-diagnostic routine in which the functionalities of its components, especially of said data processing unit (140) and/or said data storage unit (146) and/or said connector (230, 234, 244, 248, 252, 256, 274, 278, 284, 288, 294), are validated.

11. Data node (20, 24) according to one of the claims 1 to 10, whereby said data node (20, 24) is configured for a connection with at least one further data node (20, 24) being connected to the same subsystem (10, 14), and whereby said data node (20, 24) converts the data stream of both subsystem connections to said standardized data stream.

12. Data node (20, 24) according to one of the claims 1 to 11, whereby said data processing unit (40) is configured to store data received from said connected subsystem (10, 14) in said data storage unit (146).

13. Data node (20, 24) according to one of the claims 1 to 12, comprising a casing (220) on which said at least connector (230, 234, 244, 248, 252, 256, 274, 278, 284, 288, 294) is provided.

14. Data node (20, 24) according to claim 13, whereby a common railing is provided which is configured to receive at least two connectors (230, 234, 244, 248, 252, 256, 274, 278, 284, 288, 294).

15. Data node (20, 24) according to claim 13 or 14, whereby said casing (220) is essentially shaped as a parallelepiped, and whereby at least at two walls (226, 240, 270, 280, 290) with connectors (230, 234, 244, 248, 252, 256, 274, 278, 284, 288, 294) are provided.

16. Data node (20, 24) according to one of the claims 13 to 15, whereby at least one wall (226, 240, 270, 280) comprises at least two connectors (230, 234, 244, 248, 252, 256, 274, 278, 284, 288, 294).

17. Satellite system (2), comprising an on-board computer (6), further comprising at least one subsystem (10, 14), **characterized in that** a data node (20, 24) according to one of the claims 1 to 16 is provided which is connected to said subsystem (10, 14) and to said on-board computer (6), and whereby said computer (6) is configured to receive said standardized data stream of said data node (20, 24).

18. Satellite, comprising a satellite system (2) according to claim 17.

## Patentansprüche

1. Intelligenter Satellitendatenknoten (20, 24) zur Verwendung in einem Satelliten, umfassend eine Datenverarbeitungseinheit (140) und umfassend eine Datenspeichereinheit (146), ferner umfassend mindestens eine raumqualifizierte Datenschnittstelle (76-86) für eine Datenverbindung (12, 18) zu einem Teilsystem (10, 14), insbesondere einer Nutzlast oder Avionik, und/oder zu einem Bordcomputer (6), wobei der Datenknoten (20, 24) für jede Schnittstelle einen entsprechenden Verbinder umfasst (230, 234, 244, 248, 252, 256, 274, 278, 284, 284, 288, 294), und wobei die Datenspeichereinheit (146) konfiguriert ist, um mehrere Datenblätter zu speichern, und wobei die Datenverarbeitungseinheit (140) konfiguriert ist, um unter Verwendung des Datenblatts einen Datenstrom des Teilsystems (10, 14) in einen standardisierten Datenstrom mit einem Standardformat (180) zu konvertieren, das in dem Datenknoten (20, 24) definiert ist, und um den standardisierten Datenstrom über die Datenschnittstelle an den bordeigenen Computer (6) zu übertragen.

2. Datenknoten (20, 24) nach Anspruch 1, wobei die raumbezogene Datenschnittstelle aus der folgenden Gruppe ist: SpaceWire, MIL1553B, CAN, 12C, RS422, RS232, SPI, Glasfaser, Wizardlink.

3. Datenknoten (20, 24) nach Anspruch 1 oder 2, wobei die Datenverarbeitungseinheit (140) konfiguriert ist, um Protokolle zwischen den Schnittstellen (76-86) zu konvertieren.

4. Datenknoten (20, 24) nach einem der Ansprüche 1 bis 3, wobei die Datenverarbeitungseinheit (140) konfiguriert ist, um ein verbundenes Teilsystem (10, 14) zu identifizieren.

5. Datenknoten (20, 24) nach Anspruch 4, wobei die Identifikation mittels des in der Datenspeichereinheit (146) gespeicherten Datenblatts gebildet wird.

6. Datenknoten (20, 24) nach Anspruch 5, wobei die Identifizierung durch mehrfaches Decodieren von Datenpaketen, die von dem Teilsystem (10, 14) empfangen werden, gebildet wird, jedes Mal gemäß einer in der Datenspeichereinheit (146) und/oder dem Datenblatt gespeicherten Teilsystem-Referenztabelle und Analysieren der Gültigkeit von Daten, um mit dem wahrscheinlichsten Teilsystem (10, 14) übereinzustimmen.

7. Datenknoten (20, 24) nach einem der Ansprüche 4 bis 6, wobei die Identifizierung durch ein Nachschlagen einer Identifikationsnummer durchgeführt wird, die dem Teilsystem (10, 14) zugeordnet und von diesem übertragen und in der Datenspeichereinheit (146) gespeichert ist.

8. Datenknoten (20, 24) nach einem der Ansprüche 4 bis 7, wobei die Identifizierung durch ein Nachschlagen einer Anwendungsidentifikationsnummer, wie sie im Paketnutzungsstandard definiert ist, durchgeführt wird.

9. Datenknoten (20, 24) nach einem der Ansprüche 4 bis 8, wobei der Datenknoten (20, 24) nach der Identifizierung des Teilsystems (10, 14) das Teilsystem (10, 14) initialisiert.

10. Datenknoten (20, 24) nach einem der Ansprüche 1 bis 9, wobei der Datenknoten (20, 24) konfiguriert ist, um eine Selbstdiagnoseroutine durchzuführen, bei der die Funktionalitäten seiner Komponenten, insbesondere der Datenverarbeitungseinheit (140) und/oder die Datenspeichereinheit (146) und/oder der Verbinder (230, 234, 244, 248, 252, 256, 274, 278, 284, 288, 294) validiert sind.

11. Datenknoten (20, 24) nach einem der Ansprüche 1 bis 10, wobei der Datenknoten (20, 24) für eine Verbindung mit mindestens einem weiteren Datenknoten (20, 24) konfiguriert ist, der mit demselben Teilsystem (10, 14) verbunden ist, und wobei der Datenknoten (20, 24) den Datenstrom beider Teilsysteme in den standardisierten Datenstrom umwandelt.

12. Datenknoten (20, 24) nach einem der Ansprüche 1 bis 11, wobei die Datenverarbeitungseinheit (40) konfiguriert ist, um die vom verbundenen Teilsystem (10, 14) empfangenen Daten in der Datenspeichereinheit (146) zu speichern.

13. Datenknoten (20, 24) nach einem der Ansprüche 1 bis 12, umfassend ein Gehäuse (220), an dem der mindestens eine Verbinder (230, 234, 244, 248, 252, 256, 274, 278, 284, 288, 294) vorgesehen ist.

14. Datenknoten (20, 24) nach Anspruch 13, wobei ein gemeinsames Geländer vorgesehen ist, das konfiguriert ist, um mindestens zwei Verbinder (230, 234, 244, 248, 252, 256, 274, 278, 284, 288, 294) aufzunehmen.

15. Datenknoten (20, 24) nach Anspruch 13 oder 14, wobei das Gehäuse (220) im Wesentlichen quaderförmig ausgebildet ist, und wobei mindestens zwei Wände (226, 240, 270, 280, 290) mit Anschlüssen (230, 234, 244, 248, 248, 252, 256, 274, 278, 284, 284, 288, 294) vorgesehen sind.

16. Datenknoten (20, 24) nach einem der Ansprüche 13 bis 15, wobei mindestens eine Wand (226, 240, 270, 280) mindestens zwei Verbinder (230, 234, 244, 248, 252, 256, 274, 278, 284, 288, 294) umfasst.

17. Satellitensystem (2), umfassend einen Bordcomputer (6), ferner umfassend mindestens ein Teilsystem (10, 14), **dadurch gekennzeichnet, dass** ein Datenknoten (20, 24) nach einem der Ansprüche 1 bis 16 vorgesehen ist, der mit dem Teilsystem (10, 14) und mit dem Bordcomputer (6) verbunden ist, und wobei der Computer (6) konfiguriert ist, um den standardisierten Datenstrom des Datenknotens (20, 24) zu empfangen.

18. Satellit, umfassend ein Satellitensystem (2) nach Anspruch 17.

## Revendications

1. Noeud de données intelligent pour satellite (20, 24) destiné à être utilisé dans un satellite, comprenant une unité de traitement de données (140) et comprenant une unité de stockage de données (146), comprenant en outre au moins une interface de données de qualité spatiale (76 à 86) pour une connexion de données (12, 18) à un sous-système (10, 14), en particulier une charge utile ou une avionique, et/ou à un ordinateur de bord (6), ledit noeud de données (20, 24) pour chaque interface comprenant un connecteur correspondant (230, 234, 244, 248, 252, 256, 274, 278, 284, 288, 294), et ladite unité de stockage de données (146) étant configurée pour stocker une pluralité de fiches de données, et ladite unité de traitement de données (140) étant configurée, en utilisant ladite fiche de données, pour convertir un flux de données dudit sous-système (10, 14) en un flux de données normalisé avec un format normalisé (180) qui est défini dans ledit noeud de données (20, 24) et pour transmettre ledit flux de données normalisé audit ordinateur de bord (6) par l'intermédiaire de ladite interface de données.

2. Noeud de données (20, 24) selon la revendication 1, ladite interface de données de qualité spatiale étant comprise dans le groupe constitué de : SpaceWire, MIL1553B, CAN, I2C, RS422, RS232, SPI, fibrewire et wizardlink.

3. Noeud de données (20, 24) selon la revendication 1 ou 2, ladite unité de traitement de données (140) étant configurée pour convertir des protocoles entre lesdites interfaces (76 à 86).

4. Noeud de données (20, 24) selon l'une des revendications 1 à 3, ladite unité de traitement de données (140) étant configurée pour identifier un sous-système connecté (10, 14).

5. Noeud de données (20, 24) selon la revendication 4, ladite identification étant exécutée au moyen de ladite fiche de données stockée dans ladite unité de stockage de données (146).

6. Noeud de données (20, 24) selon la revendication 5, ladite identification étant réalisée en décodant des paquets de données provenant dudit sous-système (10, 14) de multiples fois, chaque fois conformément à une table de référence de sous-système stockée dans ladite unité de stockage de données (146) et/ou fiche de données et en analysant la validité de données à mettre en correspondance avec le sous-système (10, 14) le plus probable.

7. Noeud de données (20, 24) selon l'une des revendications 4 à 6, ladite identification étant réalisée par une consultation d'un numéro d'identification attribué et transmis par ledit sous-système (10, 14) et stocké dans ladite unité de stockage de données (146).

8. Noeud de données (20, 24) selon l'une des revendications 4 à 7, ladite identification étant réalisée par une consultation d'un numéro d'identification d'application tel que défini dans la norme d'utilisation de paquets.

9. Noeud de données (20, 24) selon l'une des revendications 4 à 8, après l'identification dudit sous-système (10, 14), ledit noeud de données (20, 24) initialisant ledit sous-système (10, 14).

10. Noeud de données (20, 24) selon l'une des revendications 1 à 9, ledit noeud de données (20, 24) étant configuré pour réaliser un sous-programme d'auto-diagnostic dans lequel les fonctionnalités de ses composants, en particulier de ladite unité de traitement de données (140) et/ou de ladite unité de stockage de données (146) et/ou dudit connecteur (230, 234, 244, 248, 252, 256, 274, 278, 284, 288, 294), sont validées.

11. Noeud de données (20, 24) selon l'une des revendications 1 à 10, ledit noeud de données (20, 24) étant configuré pour une connexion avec au moins un autre noeud de données (20, 24) connecté au même sous-système (10, 14), et ledit noeud de données (20, 24) convertissant le flux de données des deux connexions de sous-système en ledit flux de données normalisé.

12. Noeud de données (20, 24) selon l'une des revendications 1 à 11, ladite unité de traitement de données (40) étant configurée pour stocker des données provenant dudit sous-système connecté (10, 14) dans ladite unité de stockage de données (146).

13. Noeud de données (20, 24) selon l'une des revendications 1 à 12, comprenant un boîtier (220) dans lequel ledit au moins un connecteur (230, 234, 244, 248, 252, 256, 274, 278, 284, 288, 294) est fourni.

14. Noeud de données (20, 24) selon la revendication 13, une barrière commune qui est configurée pour recevoir au moins deux connecteurs (230, 234, 244, 248, 252, 256, 274, 278, 284, 288, 294) étant fournie.

15. Noeud de données (20, 24) selon la revendication 13 ou 14, ledit boîtier (220) étant essentiellement en forme de parallélépipède, et au moins deux parois (226, 240, 270, 280, 290) avec des connecteurs (230, 234, 244, 248, 252, 256, 274, 278, 284, 288, 294) étant fournies.

16. Noeud de données (20, 24) selon l'une des revendications 13 à 15, au moins une paroi (226, 240, 270, 280) comprenant au moins deux connecteurs (230, 234, 244, 248, 252, 256, 274, 278, 284, 288, 294).

17. Système satellite (2), comprenant un ordinateur de bord (6), comprenant en outre au moins un sous-système (10, 14), **caractérisé en ce qu'**un noeud de données (20, 24) selon l'une des revendications 1 à 16, qui est connecté audit sous-système (10, 14) et audit ordinateur de bord (6), est fourni, et ledit ordinateur (6) étant configuré pour recevoir ledit flux de données normalisé dudit noeud de données (20, 24).

18. Satellite, comprenant un système satellite (2) selon la revendication 17.
